# EUROPÄISCHE PATENTSCHRIFT

(11) **EP 1 480 867 B1**
(45) Veröffentlichungstag und Bekanntmachung des Hinweises auf die Patenterteilung: **14.09.2005**
(21) Anmeldenummer: 03706490.4
(22) Anmeldetag: 13.02.2003
(51) Int. Cl.: B62D 65/00, B23P 21/00

(54) **MONTAGEWERK FÜR DIE MONTAGE VON INDUSTRIELLEN PRODUKTEN**
ASSEMBLY PLANT FOR ASSEMBLING INDUSTRIAL PRODUCTS
USINE DE MONTAGE SERVANT AU MONTAGE DE PRODUITS INDUSTRIELS

(30) Priorität: 01.03.2002 DE 10208850
(43) Veröffentlichungstag der Anmeldung: 01.12.2004
(73) Patentinhaber: Bayerische Motoren Werke Aktiengesellschaft, 80809 München (DE)
(72) Erfinder: KNAU, Jan, 80995 München (DE); SCHLAGE, Gerd, 81245 München (DE); FENZL, Werner, 81827 München (DE)
(86) Internationale Anmeldenummer: PCT/EP2003/001401
(87) Internationale Veröffentlichungsnummer: WO 2003/074348

(56) Entgegenhaltungen:
- EP-A- 0 737 543
- EP-A- 0 738 652
- US-A- 3 889 797
- "ADVERTISEMENT" REVUE AUTOMOBILE, HALLWAG S.A. BERNE, CH, Bd. 84, Nr. 27, 29. Juni 1989 (1989-06-29), Seite 9 XP000107080 ISSN: 0035-0761
- SCHAEFER F: "TRANSFERMODULE BASIS VON MONTAGEANLAGEN" TECHNISCHE RUNDSCHAU, HALLWAG VERLAG. BERN, CH, Bd. 86, Nr. 36, 9. September 1994 (1994-09-09), Seiten 32-34, XP002038122 ISSN: 1023-0823

## Beschreibung

Die Erfindung bezieht sich auf ein Montagewerk nach dem Oberbegriff des Anspruchs 1.

Ein gattungsgemäßes Montagewerk ist aus der EP 0 738 652 B1 bekannt. Es besitzt einen Zentrumsbereich, von dem kreuzförmig oder radial Hallenbereiche abzweigen, in denen jeweils U-förmig verlaufende Förderschleifen vorhanden sind. In den Zwischenräumen sind weitere separate Montagehallen vorgesehen, in denen Baugruppen vorgefertigt werden. Aufgrund dieser Anordnung werden kurze Transportwege für die vormontierten Baugruppen erreicht.

Nachteilig bei dieser Grundkonzeption einer Endmontage für Fahrzeuge ist deren eingeschränkte Flexibilität bezüglich der Änderung von Montageabläufen und der Integration unterschiedlicher Fahrzeugkonzepte.

Aufgabe der vorliegenden Erfindung ist es, hier Abhilfe zu schaffen.

Gelöst wird diese Aufgabe durch die Merkmale des ersten Anspruchs. Im Gegensatz zum Stand der Technik wird nunmehr eine zentrale langgestreckte Montagehalle vorgesehen, bei der an einer Langseite fingerartige Hallenverlängerungen abzweigen. An den Längsseiten der zentralen Montagehalle und an den Außenseiten der Hallenverlängerungen verlaufen die Fördereinrichtungen, so dass sich ein gesamter U-förmiger Verlauf einstellt. Damit ist zumindest eine Hallenquerseite frei, die sich für bauliche Veränderungen anbietet, also eine Verlängerung der Halle und damit auch der Förderstrecke ohne tiefgreifende Eingriffe in den gesamten Ablauf.

Diese Anordnung ist besonders vorteilhaft in Verbindung mit der Weiterbildung nach Anspruch 3 oder 4. In der Regel benötigen die automatisierten Montageplätze unabhängig von zu produzierenden Fahrzeugtyp immer den gleichen Platzbedarf. Sie sind deshalb in der zentralen Montagehalle angeordnet und bestimmen neben dem Platzbedarf für Anlieferverkehr (z.B. durch LKW) den Rasterabstand für die fingerartigen Hallenverlängerungen. Eine Änderung der manuellen Arbeitsplätze, die in den fingerartigen Hallenverlängerungen untergebracht sind, ist bei einem Produktionswechsel durch einfache bauliche Verlängerung an der Kopfseite oder durch geänderte Materialbereitstellung und ggf. das Versetzen von Handlingsgeräten problemlos möglich. Damit ist eine Trennung der manuellen, personalintensiven Arbeiten von den automatisierten, komplexen Prozessen möglich.

Weitere vorteilhafte Ausgestaltungen beschreiben die Unteransprüche.

Besonders kurze Wege für die Werker werden durch Anordnung der Sozialräume und/oder Arbeitsräume gemäß Anspruch 6 erzielt. Diese sind entlang einer zentral angeordneten Achse vorgesehen.

Die Weiterbildung der Erfindung nach Anspruch 7 vereinfacht den baulichen Aufwand, auch im Hinblick auf eine einfache Erweiterung der Hallen.

Die Ausgestaltungen durch die Ansprüche 8 bis 10 beschreiben einen einfachen Aufbau für die Fördereinrichtungen und den Materialtransport zu den Montageplätzen.

Im folgenden wird die Erfindung an Hand eines ausgewählten Beispieles näher erläutert. Es stellen dar:
- Figur 1: eine schematisierte Draufsicht auf eine Montagehalle;
- Figur 2: einen schematisierten Querschnitt durch einen fingerartigen Hallenabschnitt.

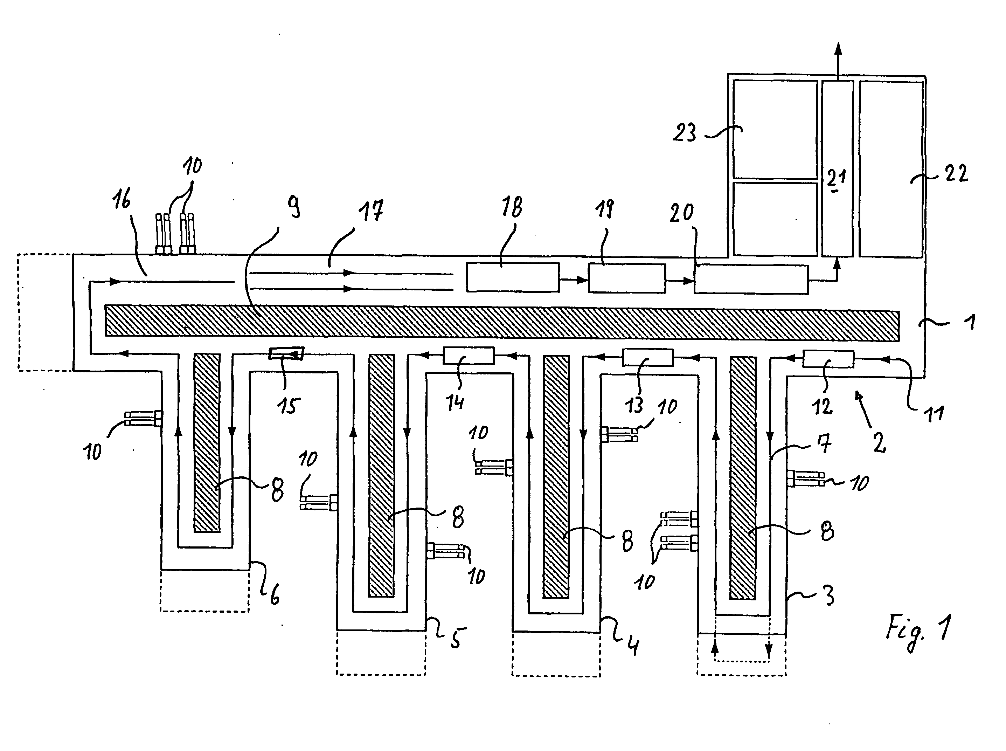

In Figur 1 ist eine zentrale Montagehalle 1 für die Endmontage von Kraftfahrzeugen, insbesondere von Personenwagen schematisiert dargestellt. An einer Langseite 2 dieser Montagehalle 1 sind in diesem Beispiel vier fingerartige Hallenverlängerungen 3, 4, 5 und 6 angebaut.

Eine Fördereinrichtung 7 verläuft U-förmig an den Außenseiten der Montagehalle 1 und den Hallenverlängerungen 3 bis 6. Gezeigt ist die Fördereinrichtung 7 als eine einzige Förderanlage. In der Praxis besteht sie jedoch aus mehreren Förderanlagen, die je nach Bedarf aufgebaut sind.

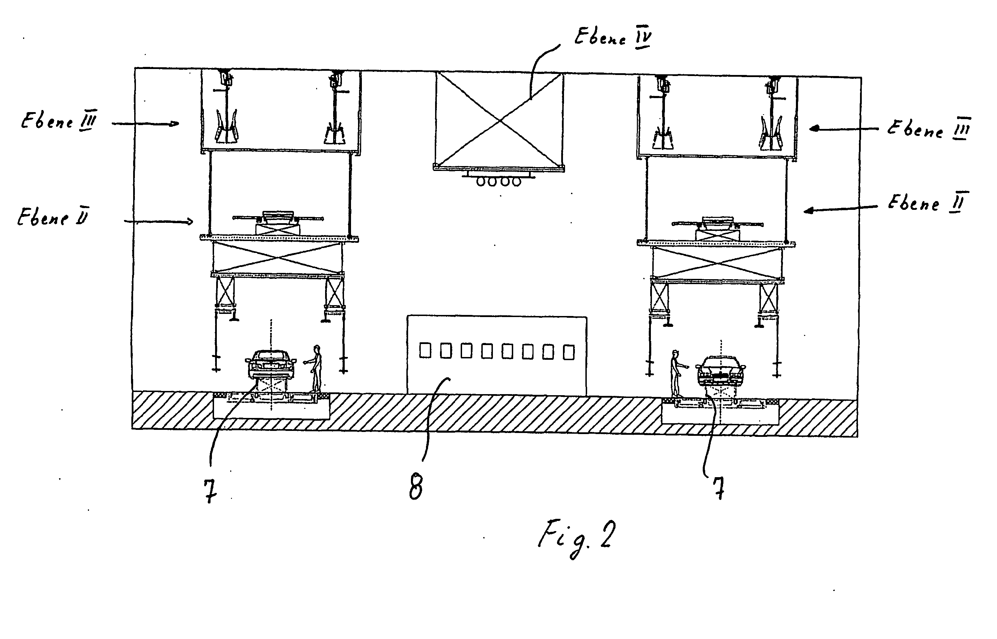

Der Rücktransport der einzelnen Förderhilfsmittel wie Transportschlitten, Montage-Aggregateträger und ähnlichem erfolgt in einer zweiten Ebene II (Fig. 2) oberhalb der Fördereinrichtung. Die Zulieferung der zu verbauenden Bauteile an die Montageplätze geschieht über eine eigene Fördereinrichtung, die in einer eigenen dritten Ebene III (Fig. 2) oberhalb der zweiten Ebene liegt. Damit ist eine gegenseitige Blockade der einzelnen Fördereinrichtungen vermieden. Umbaumaßnahmen können somit weitgehend unabhängig voneinander, in kurzer Zeit und mit geringen Investitionen realisiert werden.

Zwischen der U-förmig verlaufenden Fördereinrichtung 7 sind Büros, Sozialräume, Aufenthaltsräume und auch Werkstätten angeordnet. Diese Flächen sind allgemein mit 8 in den Hallenverlängerungen und mit 9 in der zentralen Montagehalle 1 bezeichnet.

Die Versorgung sowohl der Fördereinrichtung 7 als auch der Flächen 8 und 9 mit Energie, Frischluft und anderen benötigten Medien geschieht in einer Ebene über diesen Flächen (Ebene IV in Figur 2). Damit ist zum einen eine Behinderung der Montage selbst als auch einer Erweiterung der Hallen ausgeschlossen.

Außen sowohl an den Hallenverlängerungen als auch an der zentralen Montagehalle sind an den benötigten Stellen Laderampen 10 vorgesehen, um benötigte Materialen schnell anliefern zu können, z.B. über LKW.

Im folgenden wird der Aufbau an Hand eines Montagedurchlaufs nochmals erläutert. Die zu komplettierenden Karosserien werden bei 11 aus dem Karossenspeicher (nicht dargestellt) über einen Tragkettenförderer eingespeist. In dem Karossenspeicher werden die fertig lackierten Karosserien bis zum Abruf zur Endmontage zwischengespeichert.

Über eine Hubstation wird die angelieferte lackierte Karosserie auf die Bodenebene der zentralen Montagehalle 1 abgesenkt und von einem weiteren Tragkettenförderer als Bestandteil der Fördereinrichtung 7 im Taktbetrieb transportiert.

Als erstes wird in einen ersten Fixpunkt 12 mit Hilfe eines Roboters die Fahrgestellnummer in die Karosserie eingearbeitet. Anschließend werden in diesem Bereich die Türen des Fahrzeuges demontiert und mit einem Handlingsgerät an ein Gehänge übergeben. Um Beschädigungen während der Montage zu vermeiden und die Zugängigkeit zu verbessern, werden die Türen in einer separaten Vormontage, welche in einem nicht näher dargestellten Versorgungszentrum in einer anderen Halle angesiedelt ist, vormontiert. Der Transport der Türen in das Versorgungszentrum erfolgt über eine Elektrohängebahn in der dritten Ebene. Die Gehänge werden in Hubstationen auf die Förderebene gehoben. Im Anschluss an den Türenausbau wird - sofern für das Fahrzeug vorgesehen - der Deckel des Schiebedaches eingebaut. Hierzu wird die sogenannte Schiebedachkassette mit Hilfe eines Roboters im Fahrzeug verbaut. Damit wird der erste Fixpunkt 12 verlassen.

Anschließend werden die Karosserien mittels einer Elektrohängebahn von dem Tragkettenförderer abgehoben und auf eine Schubplatte abgesetzt. Diese Schubtechnik (in den Boden eingelassene Platte, auf der das Fahrzeug steht und die breit genug ist, dass ein Werker mit dem Auto mitfahren kann) wird, mit einer kurzen Unterbrechung bis zum Ende der Karosseriemontage verwendet. Die Schubplattformen sind mit Hubtischen ausgerüstet, so dass das Fahrzeug stets in eine ergonomisch günstige Höhe gebracht werden kann.

Mit dieser Schubplatte wird das Fahrzeug in den ersten Hallenabschnitt 3 gefördert, in dem hauptsächlich manuelle Tätigkeiten stattfinden, wie z.B. der Einbau von Steuergeräten und das Verlegen der Kabelbäume.

Anschließend gelangt das Fahrzeug wieder in die zentrale Montagehalle 1 zum zweiten Fixpunkt 13. Hier wird das Cockpit mit Hilfe eines Roboters verbaut.

Das Cockpit wird im Versorgungszentrum vormontiert und geprüft, in die Montage gefördert und dort mit Hilfe einer Hubstation auf Bodenniveau abgesenkt.

Sodann verlässt das Fahrzeug den zweiten Fixpunkt 13 in der zentralen Montagehalle 1 wieder und gelangt in den Hallenabschnitt 4. Hier durchläuft das Fahrzeug die sogenannte Schwenkmontage, einen Hängeförderer, in dem Karosserie um ihre Längsachse gedreht werden kann. Durch dieses Schwenken der Karosserien können Teile am Unterboden des Fahrzeugs (Tank, Leitungen, Abschirmbleche, etc.) ergonomisch günstig verbaut werden.

Anschließend werden die Karosserien wieder auf die Schubtechnik übergeben.

Nach dem Anbringen weiterer Verkleidungsteile im Innenraum verlassen die Fahrzeuge den Hallenabschnitt 4 wieder und gelangen zum dritten Fixpunkt 14 in der zentralen Montagehalle 1. Hier werden die Scheiben und Sitze eingebaut.

Anschließend verlässt das Fahrzeug die zentrale Montagehalle 1 wieder und gelangt in den Hallenabschnitt 5, in dem die restlichen Ausstattungsteile im Innenraum und' Gepäckraum, am Unterboden und im Motorraum am Fahrzeug angebracht werden.

Das Fahrzeug verlässt nun den Hallenabschnitt 5 und gelangt wieder in die zentrale Montagehalle 1 zum vierten Fixpunkt 15, in dem die Fördertechnik automatisch gewechselt wird. Das Fahrzeug wird nunmehr einem Hängeförderer übergeben, der das Fahrzeug an geeigneten Adaptern am Fahrzeugunterboden aufnimmt. Der Hängeförderer besitzt ebenfalls eine Höhenverstellung, so dass auch hier eine gute Ergonomie für den Werker sichergestellt ist. Außerdem wird hier die bisher als Förderhilfsmittel vorhandene Lacktraverse, über die das Fahrzeug bisher mit der bisherigen Fördereinrichtung verbunden war, demontiert.

Sodann gelangt das Fahrzeug wieder aus der zentralen Montagehalle in den Hallenabschnitt 6, in der der Aggregateeinbau erfolgt.

Nach Verlassen des Hallenabschnitts 6 gelangen die Fahrzeuge wieder in die zentrale Montagehalle 1, wobei anschließend auf die andere Längsseite des Gebäudes gewechselt wird. Hier werden das sogenannte Frontend (vorderer Stoßfänger, Leuchten, etc.), der hintere Stoßfänger sowie die Räder verbaut. Das Fahrzeug ist damit rollfähig.

Als nächste Station gelangen die Fahrzeuge in die Befüllstation in der sie mit den notwendigen Betriebsflüssigkeiten befüllt werden.

Nach dem Durchlauf durch die Befüllzone 17 wird das Fahrzeug zum ersten Mal gestartet. Tritt kein Fehler auf, so kann das Fahrzeug ab diesem Zeitpunkt aus eigener Kraft bewegt werden. Am Ende der Befüllbänder besteht zum ersten Mal die Möglichkeit, die fertigen Fahrzeuge aus dem Fertigungsfluss herauszunehmen und größere Fehler in eigens dafür eingerichteten Nacharbeitsplätzen zu beheben.

Als nächstes folgt ein erstes Finish (Station 18), indem neben Elektrik- und Elektronikumfängen auch kleinere Nacharbeiten durchgeführt werden. Außerdem werden hier Einstellarbeiten an Türen und Klappen gemacht.

Nach Abschluss des ersten Finish gelangen die Fahrzeuge in eine Prüfzone 19, in der eine Reihe von Prüfständen aufgebaut sind. In diesem Bereich bewegen sich die Fahrzeuge mit eigener Motorkraft.

Anschließend an die Prüfzone 19 ist eine weitere Finish-Zone 20 vorgesehen, in der Reinigungsarbeiten und eine Oberflächenprüfung vorgenommen werden.

Fahrzeuge, die keiner weiteren Nacharbeit bedürfen, verlassen die Finish-Zone 20 und werden in einer Versandzone 21 für den Versand vorbereitet.

Fahrzeuge, bei denen in der zweiten Finish-Zone 20 Lackfehler festgestellt wurden, gelangen in einen benachbarten Nachlackbereich 22 und werden dort nachbehandelt. Wenn sie versandfertig sind, werden sie in die Versandzone 21 eingespeist.

Um Serienfahrzeuge einer Gesamtfahrzeuganalyse unterwerfen zu können, ist weiterhin noch ein Analysezentrum 23 integriert, bei dem die Fahrzeuge besonderen Prüfungen unterzogen werden können.

## Patentansprüche

1. Montagewerk für die Montage von industriellen Produkten, insbesondere von Fahrzeugen, mit einer zentralen Montagehalle,
mit mindestens einer Fördereinrichtung zum Transportieren der zu montierenden Produkte von einem Montageplatz zum anderen,
wobei mindestens eine Teilstrecke der Fördereinrichtung U-förmig angeordnet ist,
**dadurch gekennzeichnet, dass** die zentrale Montagehalle (1) in ihren Grundzügen als gestrecktes Gebäude aufgebaut ist und dass an mindestens einer seiner Langseite (2) mehrere davon abstehende fingerartige Hallenverlängerungen (3 - 6) vorgesehen sind, in denen jeweils die Fördereinrichtung (7) U-förmig angeordnet ist.

2. Montagewerk nach Anspruch 1,
**dadurch gekennzeichnet, dass** mehrere, parallel zueinander angeordnete fingerartige Teilbereiche (3 - 6) vorgesehen sind.

3. Montagewerk nach Anspruch 1 oder 2,
**dadurch gekennzeichnet, dass** in der zentralen Montagehalle (1) im wesentlichen automatisierte Montageplätze (Fixpunkte 12-15) vorgesehen sind.

4. Montagewerk nach einem der Ansprüche 1 bis 3,
**dadurch gekennzeichnet, dass** in den fingerartigen Teilbereichen (3 - 6) manuelle Montageplätze vorgesehen sind.

5. Montagewerk nach einem der Ansprüche 1 bis 4,
**dadurch gekennzeichnet, dass** in der zentralen Montagehalle (1) die Fördereinrichtung (7) im wesentlichen U-förmig verläuft, wobei an der Längsseite (2) mit den fingerartigen Teilbereichen (3 - 6) nur im wesentlichen automatisierte Montageplätze (Fixpunkte 12-15) vorhanden sind, während auf der hierzu parallelen Längsseite manuelle Montageplätze vorgesehen sind.

6. Montagewerk nach einem der Ansprüche 1 bis 5,
**dadurch gekennzeichnet, dass** zwischen den U-förmig verlaufenden Fördereinrichtungen Sozialräume und/oder Arbeitsräume (8) vorgesehen sind.

7. Montagewerk nach einem der Ansprüche 1 bis 6,
**dadurch gekennzeichnet, dass** über den Sozialräumen und/oder Arbeitsräumen (8) die Versorgungsleitungen für die benachbarten Montagebereiche angeordnet sind.

8. Montagewerk nach einem der Ansprüche 1 bis 7,
**dadurch gekennzeichnet, dass** über den Fördereinrichtungen zumindest eine weitere Ebene mit Fördereinrichtungen vorgesehen ist.

9. Montagewerk nach einem der Ansprüche 1 bis 8, wobei jedes Produkt über Förderhilfsmittel mit der Fördereinrichtung verbunden ist,
**dadurch gekennzeichnet, dass** die Fördereinrichtungen mit den zu montierenden Produkten in einer ersten Ebene vorgesehen sind und dass in einer darüber liegenden zweiten Ebene eine weitere Fördereinrichtung zum Rücktransport der Förderhilfsmittel vorgesehen ist.

10. Montagewerk nach einem der Ansprüche 1 bis 9,
**dadurch gekennzeichnet, dass** in einer dritten, über der zweiten Ebenen liegenden Ebene eine weitere Fördereinrichtung zum Zuführen der zu montierenden Bauteile/Bauteilgruppen vorgesehen ist.

## Claims

1. An installation for assembly of industrial products, especially vehicles, comprising a central assembly hall,
with at least one device for conveying the products for assembly from one place to another,
wherein at least a part of the conveying device is arranged in a U shape,
**characterised in that** the central assembly hall (1) is basically in the form of an elongate building with at least one longitudinal side (2) on which a number of projecting finger-like hall extensions (3 - 6) are provided, the conveying device (7) being disposed in a U shape in each extension.

2. An installation according to claim 1, **characterised in that** a number of parallel finger-like part regions (3 - 6) are provided.

3. An installation according to claim 1 or 2, **characterised in that** substantially automated assembly stations (fixed points 12 - 15) are provided in the central assembly hall (1).

4. An installation according to any of claims 1 to 3, **characterised in that** manual assembly stations are provided in the finger-like part regions (3 - 6).

5. An installation according to any of claims 1 to 4, **characterised in that** in the central assembly hall (1) the conveying device (7) extends substantially in a U-shape, only substantially automated assembly stations (fixed points 12 - 15) provided on the longitudinal side (2) comprising the finger-like part regions (3 - 6) whereas manual assembly stations are provided on the longitudinal side parallel thereto.

6. An installation according to any of claims 1 to 5, **characterised in that** utility rooms or spaces and/or work spaces (8) are provided between the U-shaped conveying devices.

7. An installation according to any of claims 1 to 6, **characterised in that** the supply lines for the neighbouring assembly regions are laid through the utility rooms and/or work spaces (8).

8. An installation according to any of claims 1 to 7, **characterised in that** at least one additional level containing conveying devices is provided above the previously-mentioned conveying devices.

9. An installation according to any of claims 1 to 8, wherein each product is connected to the conveying device via an auxiliary conveying device, **characterised in that** the conveying devices and the products for assembly are provided at a first level and an additional conveying device for returning the auxiliary conveying device is provided in a second level above.

10. An installation according to any of claims 1 to 9, **characterised in that** an additional conveying device for supplying the components or groups of components for assembly is provided at a third level above the second level.

## Revendications

1. Usine de montage pour des produits industriels, notamment des automobiles, qui comprend un hall central de montage et au moins un dispositif de transport pour faire passer les produits à monter d'une place de montage à une autre, ce dispositif présentant au moins en partie la forme d'un U,
**caractérisée en ce que**
le hall central de montage (1) est, dans ses grandes lignes, un bâtiment allongé avec, sur au moins un de ses côtés longitudinaux (2), plusieurs prolongements de hall (3 à 6) en forme de doigts faisant saillie sur le hall central, et dans chacun desquels le dispositif de transport (7) a la forme d'un U.

2. Usine de montage selon la revendication 1,
**caractérisée en ce qu'**
il est prévu plusieurs zones partielles (3 à 6) parallèles entre elles et en forme de doigts.

3. Usine de montage selon la revendication 1 ou 2,
**caractérisée en ce que**
dans le hall central de montage (1) sont prévues des places de montage (points fixes 12 à 15) essentiellement automatisées.

4. Usine de montage selon une des revendications 1 à 3,
**caractérisée en ce que**
dans les zones partielles (3 à 6) en forme de doigts sont prévues des places de montage manuel.

5. Usine de montage selon une des revendications 1 à 4,
**caractérisée en ce que**
dans le hall central de montage (1) le dispositif de transport (7) circule selon une forme essentiellement en U et, sur le bord longitudinal (2) présentant les zones partielles (3 à 6) en forme de doigts, il n'est prévu que des places de montage (points fixes 12 à 15) essentiellement automatisées, tandis que sur l'autre côté longitudinal parallèle, sont prévues des places de montage manuel.

6. Usine de montage selon une des revendications 1 à 5,
**caractérisée en ce qu'**
entre les dispositifs de transport circulant selon la forme d'un U, sont prévus des locaux sociaux et/ou des locaux de travail (8).

7. Usine de montage selon une des revendications 1 à 6,
**caractérisée en ce que**
les conduites d'alimentation des zones de montage voisines sont disposées au-dessus des locaux de travail (8).

8. Usine de montage selon une des revendications 1 à 7,
**caractérisée en ce qu'**
au-dessus des dispositifs de transport se trouve au moins un autre plan avec des dispositifs de transport.

9. Usine de montage selon une des revendications 1 à 8, dans laquelle chaque produit est relié au dispositif de transport par des moyens auxiliaires,
**caractérisée en ce que**
les dispositifs de transport, avec les produits montés dessus, sont prévus dans un premier plan et, dans un second plan situé au-dessus, se trouve un autre dispositif de transport assurant le retour des moyens auxiliaires de transport.

10. Usine de montage selon une des revendications 1 à 9,
**caractérisée en ce que**
dans une troisième plan situé au-dessus du deuxième, il est prévu un autre dispositif de transport pour amener les composants aux groupes de composants à monter.
